# EUROPÄISCHE PATENTSCHRIFT

(11) **EP 1 952 116 B1**
(45) Veröffentlichungstag und Bekanntmachung des Hinweises auf die Patenterteilung: **22.11.2017**
(21) Anmeldenummer: 06818769.9
(22) Anmeldetag: 23.11.2006
(51) Int. Cl.: G01M 17/007, G01M 17/06

(54) **PRÜFVORRICHTUNG FÜR FAHRZEUGE, UM EIN ETWAIGES ACHSSPIEL BZW. GELENKSPIEL SICHTBAR ZU MACHEN**
VEHICLE MOTOR TESTING DEVICE FOR DISPLAYING AN AXLE OR JOINT PLAY
DISPOSITIF DE CONTROLE POUR VEHICULES DESTINE A METTRE EN EVIDENCE UN JEU D'ESSIEU OU UN JEU DANS LES JOINTS DE TRANSMISSION EVENTUEL

(30) Priorität: 28.11.2005 DE 102005056655
(43) Veröffentlichungstag der Anmeldung: 06.08.2008
(73) Patentinhaber: Sherpa Autodiagnostik GmbH, 84453 Mühldorf (DE)
(72) Erfinder: RISCHKE, Manfred, 87749 Hawangen (DE)
(74) Vertreter: Manitz Finsterwald Patentanwälte PartmbB
(86) Internationale Anmeldenummer: PCT/EP2006/011249
(87) Internationale Veröffentlichungsnummer: WO 2007/059970

(56) Entgegenhaltungen:
- WO-A-98/10263
- DE-U1- 7 827 646
- DE-U1- 29 913 566
- JP-A- 61 292 035
- US-A- 4 966 376

## Beschreibung

Die vorliegende Erfindung betrifft eine Prüfvorrichtung für Fahrzeuge mit in Querrichtung des Fahrzeugs beweglichen Platten mit jeweils einer Antriebseinrichtung, die die Räder einer Achse seitlich verschiebt und lenkt, um ein etwaiges Achsspiel bzw. Gelenkspiel sichtbar zu machen.

Eine Prüfvorrichtung dieser Art ist seit langem aus der DE-U-29913566 bekannt und besteht aus einer ebenen Rüttelplatte, die beispielsweise dem rechten Vorderrad eines Kraftfahrzeugs zugeordnet ist und einer aus einer feststehenden Platte und einer beweglichen Platte bestehenden Plattenanordnung, die beispielsweise dem linken Vorderrad zugeordnet ist.

Bei der Plattenanordnung sind die zwei Platten, d.h. die bewegliche Platte und die feststehende Platte, hintereinander in Längsrichtung des Fahrzeugs angeordnet und bilden zusammen eine Mulde, die das eine Fahrzeugrad aufnimmt. Dabei wird die bewegliche Platte mit einer geeigneten Antriebseinrichtung ausgestattet und zur Durchführung einer Hin- und Herbewegung in Querrichtung des Fahrzeugs ausgelegt. Auch die ebene Rüttelplatte ist zur Ausführung einer Hin- und Herbewegung in Querrichtung des Fahrzeugs ausgelegt.

Es wird in der genannten DE-U-29913566 zum Ausdruck gebracht, dass die genannte feststehende Platte auch senkrecht zur Kraftfahrzeuglängsachse verschiebbar sein kann. Allerdings wird in der konkreter Ausführungsform die feststehende Platte um eine quer zur Kraftfahrzeugstehende Achse Platte schwenkbar oder in Längsrichtung des Kraftfahrzeugs verschiebbar angeordnet und zwar um sicherzustellen das das Kraftfahrtzeug bei einer anschließenden Scheinwerferprüfung auf allen vier Rädern waagrecht steht, da dies bei Prüfung der Scheinwerfereinstellung bei moderneren Fahrzeugen erforderlich ist.

Um das Fahrzeug auf ein etwaig vorhandenes Achsspiel zu testen, wird im Stand der Technik die ebene Platte auf einer Seite hin- und herbewegt. Diese Bewegung überträgt sich auf beide Räder der geprüften Achse, beispielsweise der Vorderachse, und macht ein etwaiges, dort vorhandenes Achsspiel sichtbar, hierdurch wird die Radaufhängung überprüft.

Zur Prüfung des Gelenkspiels wird die ebene Platte festgehalten bzw. nicht angetrieben und die hin und her bewegliche Platte der Plattenanordnung auf der anderen Seite des Fahrzeugs bewegt, um eine Hin- und Herlenkbewegung der Fahrzeugräder zu erzeugen. Mit dieser Bewegung wird das Lenkspiel der Lenkung und der Lenkhebelgelenke geprüft, d.h. ein etwaiges Gelenkspiel wird für den Prüfer sichtbar gemacht.

Die beweglichen Platten werden üblicherweise hydraulisch durch jeweilige Kolben- und Zylinderanordnungen angetrieben, die mit einem entsprechenden Druckfluid von einer elektrisch angetriebenen Pumpe und zugeordneten, in angebrachter Frequenz betätigbaren Ventilen gespeist werden.

Auch sind im Stand der Technik Prüfvorrichtungen bekannt, bei denen die Plattenanordnung für die Prüfung des Gelenkspiels aus einer hin- und her bewegbaren ebenen Drehplatte besteht. Eine Prüfeinrichtung dieser Art ist in der US-A-4,996,376 beschrieben bei der Drehplatten für beide Vorderräder des Fahrzeugs vorgesehen sind. Die um eine senkrechte Achse drehbare Platten sind auch in Längsrichtung senkrecht zu einer Verbindungslinie zwischen den Platten beweglich angeordnet. Die Antriebsanordnung umfasst Führungszapfen und Lenkarmen, die von jeweiligen Kraftzylindern bewegt werden.

Der Vollständigkeit halber wird ferner auf die WO98/10263 verwiesen. Gemäß der Zusammenfassung derW098/10253 betrifft diese eine Fahrzeugprüfeinrichtung wobei die Reifen des Fahrzeugs jeweils auf zwei antreibbaren drehbaren Rollen angeordnet werden. Durch eine zusätzliche axiale Verschiebbarkeit der Rollen ist auf kleinem Raum eine Bremsen-, Spur-, Lenkspiel- und Gelenkspielprüfung möglich. Ferner ist die Anordnung ausgelegt, um eine Stoßdämpferprüfung zu ermöglichen.

Die Platteneinrichtungen gemäß dem Stand der Technik werden beispielsweise auf beiden Seiten einer Inspektionsgrube montiert, wobei der Prüfer häufig in der Grube steht, um die Prüfung durchzuführen. Alternativ hierzu können die Platten auf jeweiligen Fahrschienen einer Hebebühne angebracht werden.

Problematisch bei den bekannten Anordnungen, abgesehen von der relativ großen Bauhöhe, die entsprechende Ausnehmungen im Boden auf den beiden Seiten einer Inspektionsgrube oder einer entsprechend großen Tiefenabmessung der Fahrschienen einer Hebebühne erforderlich macht, ist die Notwendigkeit, die Versorgungsleitungen und elektrischen Steuerleitungen zwischen dem Druck erzeugenden Aggregat und den beiden Platteneinrichtungen zu führen, die jeweils einem Rad der geprüften Achse zugeordnet sind. Bei einer Arbeitsgrube führt dies zu einer nicht unerheblichen Länge der Leitungen und bei einer Hebebühnenanordnung würde ebenfalls eine lange Leitungslänge und/oder Leitungsübergänge erforderlich, was zu einem enormen Kostenmehraufwand für Installation und Montagematerial führt.

Aufgabe der vorliegenden Erfindung ist es, eine Prüfvorrichtung der eingangs genannten Art zur Verfügung zu stellen, die sich nicht nur durch geringe Bauhöhe, sondern auch durch einen besonders wirtschaftlichen, kompakten Aufbau auszeichnet, bei dem störende Leitungsverläufe nicht mehr vorhanden sind bzw. auf ein Minimum reduziert werden.

Um diese Aufgabe zu lösen, wird erfindungsgemäß eine Prüfvorrichtung der eingangs genannten Art vorgesehen, mit dem besonderen Kennzeichen, dass die zwei beweglichen Platten hintereinander in Längsrichtung des Fahrzeugs angeordnet sind und miteinander eine ein Fahrzeugrad aufnehmende Radaufstandsfläche bilden und dass die jeweiligen Antriebseinrichtungen ausgelegt sind, um die zwei Platten zur Achsspielprüfung miteinander seitlich hin und her zu verschieben und zur Lenkhebel-Gelenkspielprüfung gegeneinander hin und her zu verschieben.

Dies bedeutet, dass erfindungsgemäß die Prüfvorrichtung nur dem einen Rad des Fahrzeugs angeordnet ist, so dass Leitungsübergänge zu einer weiteren Prüfvorrichtung, die dem anderen Rad der gleichen Achse zugeordnet ist, nicht mehr erforderlich sind, da eine weitere Prüfvorrichtung nicht vorgesehen ist. Ferner ist bei hydraulischen Antriebseinrichtungen nur eine hydraulische Pumpe und ein Antriebsmotor für diese Pumpe erforderlich. Obwohl die Prüfvorrichtung nur dem einen Rad zugeordnet ist, werden die Bewegungen dieses Rades auf das andere Rad der gleichen Achse übertragen, so dass die Achsspiel- und Gelenkspielprüfungen auch bei beiden Rädern der Achse vorgenommen werden können.

Dadurch, dass nur eine Prüfvorrichtung notwendig ist, die nur an einem Rad eingreift, werden eine Materialersparnis sowie eine Zeitersparnis für den Einbau der Prüfvorrichtung erreicht.

Eine Möglichkeit, jede Antriebseinrichtung zu realisieren, besteht darin, in zwei entgegengesetzte Richtungen wirkende Kolben- und Zylinderanordnungen vorzusehen, wobei die eine Kolben- und Zylinderanordnung, die jeweils zugeordnete Platte nach rechts und die andere Kolben- und Zylinderanordnung die gleiche Platte anschließend nach links bewegt.

Alternativ hierzu kann jede Antriebseinrichtung aus einer doppelt wirkenden Kolben- und Zylinderanordnung bestehen.

Grundsätzlich besteht die Möglichkeit, die Kolben- und Zylinderanordnungen für die beweglichen Platten pneumatisch anzutreiben, wodurch die Druckluftanlagen, die üblicherweise in Kraftfahrzeugwerkstätten zu finden sind, auch zu diesem Zweck ausgenutzt werden können.

Bevorzugt ist jedoch eine Konstruktion, bei der die Kolben- und Zylinderanordnungen hydraulisch angetrieben werden, da hierdurch die Zylinderabmessungen und daher die Bauhöhe auf ein Minimum reduziert werden können. Bei Verwendung der erfindungsgemäßen Prüfvorrichtung auf einer Fahrschiene einer Hebebühne, kann das Druckfluid von einem Hydraulikaggregat entnommen werden, das für die Anhebung und Absenkung der Hebebühne vorgesehen ist. D.h. es muss kein getrenntes Hydraulikaggregat vorgesehen werden. Wenn ein getrenntes Hydraulikaggregat vorgesehen wird, so hat dies üblicherweise Platz unterhalb der einen Fahrschiene oder am Boden neben dieser Fahrschiene.

Mit hydraulischen Konstruktionen kann die Bauhöhe der gesamten Prüfvorrichtung ohne weiteres im Bereich von 4 bis 10 cm liegen. Insbesondere ist es ohne weiteres gelungen, mit einer hydraulischen Anordnung eine gesamte Bauhöhe von 6 cm für einen PKW zu erreichen. Für einen LKW kann und darf diese Bauhöhe auch größer sein. Mit solchen Abmessungen kann die Prüfvorrichtung nicht nur auf einer Fahrschiene einer Hebebühne montiert werden, sondern sie kann auch am Werkstattboden, beispielsweise direkt neben einer Inspektionsgrube angebracht werden. Das Hydraulikaggregat kann dann vor, neben, ober- oder unterhalb der Prüfvorrichtung angebracht werden und die Leitungen entsprechend kurz gehalten werden. Insbesondere ist es nicht notwendig, die Leitungen von einer Seite der Inspektionsgrube oder der Hebebühne zur anderen zu führen.

Günstig ist es, wenn die Bewegungsamplitude jeder Platte im Bereich von 2 bis 10 cm liegt und vorzugsweise etwa 5 cm beträgt. Bewegungsamplituden in dieser Größenordnung reichen aus, um das Achsspiel auf beiden Seiten zu ermitteln. Wenn die zwei beweglichen Platten der Prüfvorrichtung gegeneinander bewegt werden, verdoppelt sich die Gesamtamplitude der Hin- und Herbewegung, da sich die eine Platte beispielsweise um 5 cm nach rechts und die andere Platte gleichzeitig um etwa 5 cm nach links bewegt.

Die Erfindung ist allerdings nicht auf pneumatisch oder hydraulisch betätigbare Antriebe angewiesen, es kommen beispielsweise auch elektrische oder elektromagnetische Antriebe in Frage. Auch sind mechanisch Antriebe denkbar. Insbesondere bei einer sehr preisgünstigen, aber dennoch voll funktionsfähigen Auslegung könnte eine manuell betriebene Antriebseinrichtung für jede bewegliche Platte vorgesehen werden, beispielsweise mit einer Antriebswelle, die von einer handbetätigten Ratsche angetrieben wird.

Besonders günstig ist es, wenn jede bewegliche Platte einer am Boden oder an einer Fahrschiene einer Hebebühne befestigbaren Bodenplatte zugeordnet ist. Da diese Bodenplatte flach ausgebildet ist, kann sie direkt am Werkstattboden oder an einer Fahrschiene einer Hebebühne befestigt werden, beispielsweise angeschraubt werden, ohne jegliches Ausschneidens vornehmen zu müssen, wodurch der Einbau der Prüfvorrichtung und die zugeordneten Einbaukosten äußert gering gehalten werden.

Jede bewegliche Platte ist vorzugsweise mittels zwei in Querrichtung des Fahrzeugs angeordneten, zueinander parallelen und voneinander in Fahrzeuglängsrichtung beabstandeten Gleitlagern der jeweiligen Bodenplatte gleitend angeordnet. Solche Gleitlager können preisgünstig realisiert werden, beispielsweise aus Teflonstreifen oder aus teflonbeschichteten Stangen. Solche Teflonstreifen oder teflonbeschichtete Stangen können entweder in Nuten der Bodenplatte eingelassen werden und ragen dann vorzugsweise über die Oberfläche der Bodenplatte in Richtung der bewegbaren Platte hinaus oder sie können in Nuten der beweglichen Platte eingelassen werden und ragen dann vorzugsweise über die Oberfläche der beweglichen Platte in Richtung der Bodenplatte hinaus.

Um eine ordentliche Führung der beweglichen Platten gegenüber der jeweils zugeordneten Bodenplatte zu erreichen, kann jede bewegliche Platte mindestens zwei voneinander in Querrichtung des Fahrzeugs angeordnete Langlöcher aufweisen, in denen jeweilige von der Bodenplatte getragene Führungszapfen angeordnet sind. Dabei weist vorzugsweise jeder Führungszapfen einen Bereich von zumindest der gleichen Querabmessung wie die des diesem zugeordneten Langlochs auf, wodurch eine ordentliche Führung der beweglichen Platte erreicht wird. Jeder Führungszapfen weist vorzugsweise oberhalb der diesem zugeordneten beweglichen Platte einen Bereich auf mit einer Querabmessung, die größer ist als die Querabmessung des diesem zugeordneten Langlochs. Hierdurch wird ein unbeabsichtigtes Abheben der beweglichen Platte bzw. einer etwaigen auf dieser angebrachten bzw. angeschraubten konvexen Abdeckplatte verhindert.

Der Bereich jedes Führungszapfens mit der größeren Querabmessung ist vorzugsweise durch eine Scheibe gebildet, die mittels einer in die Stirnseite des Führungszapfens eingeschraubten Schraube an dieser befestigt ist.

Die jeder beweglichen Platte vorzugsweise zugeordnete Abdeckplatte bildet mit der benachbarten Abdeckplatte die Mulde für das Fahrzeugrad, wobei diese eine Bauhöhe von etwa 4 cm aufweisen kann. Die Abdeckplatten selbst können aus Riffelblech bestehen.

Die Kolben der Kolben- und Zylinderanordnungen greifen vorzugsweise an die beweglichen Platten über jeweilige Kolbenstangen an, wobei der Angriffspunkt beispielsweise durch einen Anschlag gebildet werden kann, der an der beweglichen Platte angebracht bzw. angeschweißt ist.

Die Erfindung wird nachfolgend anhand eines Ausführungsbeispiels näher erläutert unter Bezugnahme auf die Zeichnung, in welcher zeigen:
- Fig. 1: eine perspektivische Darstellung der Prüfvorrichtung der vorliegenden Erfindung unterhalb des linken Vorderrades eines PKW,
- Fig. 2: eine Draufsicht auf die zwei beweglichen Platten der Prüfvorrichtung der Fig. 1 bei abgenommenen Abdeckplatten und
- Fig. 3: eine schematische Querschnittzeichnung entsprechend der Schnittebene III-III der Fig. 2.

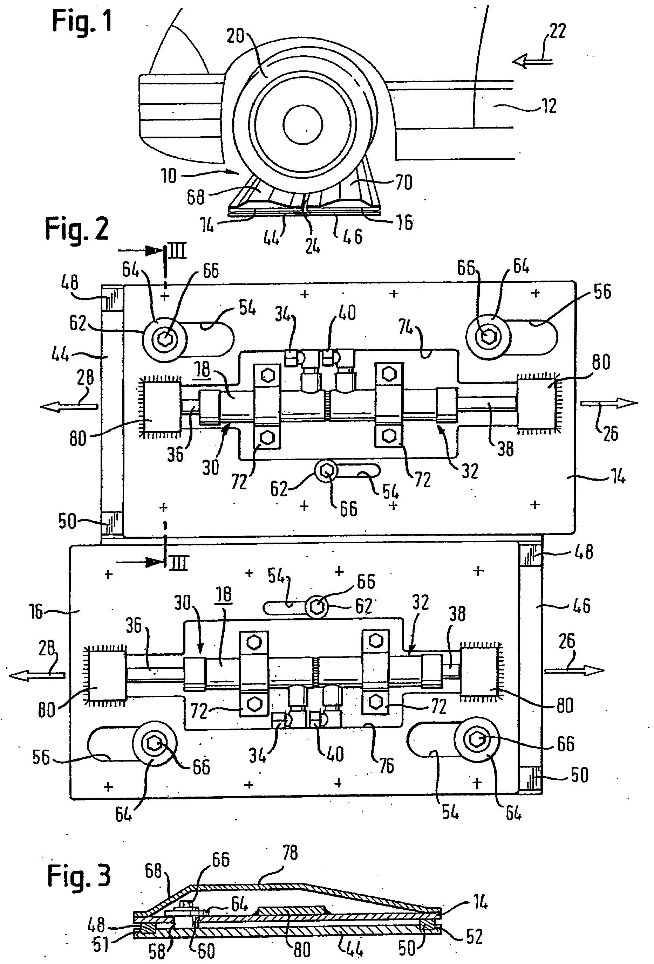

Bezug nehmend auf die Fig. 1 bis 3 ist die erfindungsgemäße Prüfvorrichtung 10 für Fahrzeuge 12 mit zwei in Querrichtung des Fahrzeugs beweglichen Platten 14, 16 mit jeweils einer Antriebseinrichtung wie 18 ausgestattet, die die Räder (beispielsweise 20) einer Achse seitlich verschieben und lenken, um ein etwaiges Achsspiel bzw. Gelenkspiel sichtbar zu machen. Konkret sind die zwei beweglichen Platten 14, 16 hintereinander in Längsrichtung des Fahrzeugs angeordnet und bilden miteinander eine ein Fahrzeugrad aufnehmende Mulde 24, die in diesem Beispiel eine Radaufstandsfläche bildet. An dieser Stelle soll zum Ausdruck gebracht werden, dass eine Mulde als solche nicht erforderlich ist. Eine ebene Radaufstandsfläche oder irgendeine geeignete Form wäre genauso möglich. Die jeweiligen Antriebseinrichtungen wie 18 sind ausgelegt, um die zwei beweglichen Platten 14, 16 zur Achsspielprüfung miteinander seitlich, d.h. in Querrichtung des Fahrzeugs, hin (Pfeil 26) und her (Pfeil 28) zu verschieben und zur Gelenkspielprüfung gegeneinander, Pfeile 26, 28, zu verschieben.

Bei der dargestellten Prüfvorrichtung besteht jede Antriebseinrichtung 18 aus zwei in entgegengesetzten Richtungen wirkende Kolben- und Zylinderanordnungen 30, 32. Wenn beispielsweise der Hydraulikzylinder 30 der beweglichen Platte 14 in Fig. 2 durch die Zufuhr von Druckfluid an den Anschlussstutzen 34 nach links ausgefahren wird, um die Platte 14 in Pfeilrichtung 28 zu bewegen, so wird die Kolbenstange 38 des benachbarten Zylinders 32 bei entsprechender Öffnung des dem Anschlussstutzen 40 zugeordneten Ventils (nicht gezeigt) durch die Bewegung der Platte zurückgedrängt und die hydraulische Flüssigkeit durch den entsprechenden Kolben aus dem Zylinder 32 und dem Anschlussstutzen 40 verdrängt. Nach dem vollen Ausfahren der Kolbenstange 36 des Hydraulikzylinders 30 wird das dem Anschlussstutzen 40 zugeordnete Ventil (nicht gezeigt) angesteuert, um Druckfluid in den Zylinder 32 wieder einzufüllen und die bewegliche Platte 14 wieder nach rechts in Pfeilrichtung 26 zu bewegen, während das bisher dem Zylinder 30 zugeführte Druckfluid aus dem Zylinder 30 durch Ansteuerung des diesem zugeordneten Ventils entlassen wird. Hierdurch wird das Druckfluid, das sich in dem Zylinder 30 befindet, durch das Zurückdrängen der Kolbenstange (36) und des dieser zugeordneten Kolbens wieder aus dem Zylinder und dem Anschlussstutzen 34 herausgepresst und durch das entsprechende Ventil beispielsweise in den dem Hydraulikaggregat zugeordneten Vorratstank zurückgeführt. Danach werden die Ventile wieder umgesteuert und der bisher beschriebene Vorgang wiederholt sich mit der erwünschten vorgesehenen Frequenz.

Die zweite bewegliche Platte 16 wird mittels der dieser zugeordneten Antriebseinrichtung 18 genauso angesteuert und bewegt, wie für die Platte 14 beschrieben, weshalb die gleichen Bezugszeichen für entsprechende Teile verwendet werden und die bisherige Beschreibung gilt genauso für diese Teile der weiteren Antriebseinrichtung. Es bestehen zwei Möglichkeiten für den Prüfer. Er kann die Steuerung der Plattenbewegungen so vornehmen, dass beiden Platten 14 und 16 gleichzeitig in die eine Richtung 26 und dann in die andere Richtung 28 verschoben werden. Hierdurch wird das Rad 20, das sich in der Mulde 24 befindet, in entsprechender Weise seitlich in Pfeilrichtung 26 bzw. 28 hin und her bewegt, und zwar zumindest im Wesentlichen ohne jegliche Lenkbewegung, da die zwei Platten 14, 16 symmetrisch auf das Rad auf beiden Seiten einer senkrechten Achse durch den tiefsten Punkt der Mulde 24 arbeiten. Diese Hin- und Herbewegung des Rades in eine Richtung quer zur FahrzeugLängsrichtung macht ein etwaiges Achsspiel für den Prüfer ersichtlich.

Werden aber die beiden Platten 14, 16 in entgegengesetzten Richtungen 26 bzw. 28 durch entsprechende zeitversetzte Ansteuerung der beiden Antriebseinrichtungen 18, d.h. der entsprechenden Zylinder 30 und 32 bewegt, so wird am Fahrzeugrad 20 eine Lenkbewegung stattfinden, die über das Lenkgetriebe auf das andere Vorderrad, in diesem Beispiel das rechte Vorderrad, übertragen wird. Hierdurch wird für den Prüfer ein etwaiges Gelenkspiel kenntliche gemacht.

Alternativ zu dieser Ausführungsform, bei der jede Antriebseinrichtung aus zwei in entgegengesetzte Richtungen wirkende Kolben- und Zylinderanordnungen gebildet ist, kann jede Antriebseinrichtung aus einer doppelt wirkenden Kolben- und Zylinderanordnung bestehen (nicht gezeigt).

Als weitere Alternative können die Kolben- und Zylinderanordnungen pneumatisch antreibbar sein, d.h. durch pneumatische Zylinder anstatt durch hydraulische Zylinder gebildet sein, und zwar ebenfalls entweder als Zylinder, die in nur eine Richtung wirken oder als doppelt wirkende Zylinder.

Die erfindungsgemäße Prüfvorrichtung kann ohne weiteres mit einer Bauhöhe im Bereich von 4 - 10 cm, insbesondere von etwa 6 cm realisiert werden. Die Antriebseinrichtungen sind vorzugsweise so ausgelegt, dass die Bewegungsamplitude jeder Platte im Bereich von 2 - 8 cm liegt und vorzugsweise bei etwa 5 cm liegt.

Die Details der bevorzugten und dargestellten Konstruktion werden nunmehr näher erläutert.

Wie aus den Figuren ersichtlich, ist jeder beweglichen Platte 14, 16 eine am Boden oder an einer Fahrschiene einer Hebebühne befestigbaren Bodenplatte 44, 46 zugeordnet. Jede bewegliche Platte 14, 16 ist ferner mittels zwei in Querrichtung des Fahrzeugs angeordneten, zueinander parallelen und voneinander in Fahrzeuglängsrichtung beabstandeten Gleitlagern 48, 50 an der jeweiligen Bodenplatte 44, 46 gleitend angeordnet. Die Gleitlager 48, 50 können aus Teflonstreifen oder aus Teflon beschichteten Stangen bestehen und sie können entweder in Nuten 51,52 der Bodenplatte 44 eingelassen und vorzugsweise über die Oberfläche der Bodenplatte hinausragen oder in Nuten der beweglichen Platte eingelassen und über die Oberfläche der beweglichen Platte in Richtung der Bodenplatte hinausragen.

Ferner weist jede bewegliche Platte mindestens zwei voneinander in Querrichtung des Fahrzeugs angeordnete Langlöcher 54, 56 auf, in denen jeweilige von der Bodenplatte getragene Führungszapfen wie 58 angeordnet sind. In Fig. 2 sind für jede Platte 14, 16 zwei große Führungszapfen 58 auf einer Seite der Antriebseinrichtung 18 vorgesehen, die durch einen dritten kleineren Führungszapfen (ebenfalls 58) auf der anderen Seite der Antriebseinrichtung ergänzt werden. Jeder Führungszapfen wie 58 weist einen Bereich wie 60 mit zumindest der gleichen Querabmessung wie die diesem zugeordneten Langloch 54 auf. Außerdem weist jeder Führungszapfen wie 58 oberhalb der zugeordneten beweglichen Platte einen Bereich 62 auf mit einer Querabmessung, die größer ist als die Querabmessung des diesem zugeordneten Langlochs wie 54. Der Bereich mit der größeren Querabmessung ist zweckmäßigerweise durch eine Scheibe 64 gebildet, die mittels einer in die Stirnseite des jeweiligen Führungszapfens wie 58 eingeschraubten Schraube 66 am Führungszapfen befestigt ist.

Wie aus Fig. 1 und 3 ersichtlich, weisen die beweglichen Platten 14, 16 jeweils eine konvexe Abdeckplatte 68, 70 auf, die an der darunterliegenden beweglichen Platte 14 bzw. 16 angebracht bzw. angeschraubt ist. Das Rad 20 ruht daher in der Mulde 24, die durch die Abdeckplatten 68, 70 gebildet ist, die jeweils einen Teil der zugeordneten beweglichen Platten bilden. Die Mulde 24 kann beispielsweise eine Tiefe im Bereich von 2 - 8 cm, insbesondere von etwa 4 cm aufweisen und die Abdeckplatten können preisgünstig aus Riffelblech hergestellt werden und abgekantet werden, um die konvexe Form zu bilden.

Die Kolben- und Zylinderanordnungen sind mittels Schellen wie 72 an den Bodenplatten 44, 46 befestigt und in Aussparungen 74, 76 der beweglichen Platten vorzugsweise unterhalb des Scheitelbereiches 78 der konvex gebogenen Abdeckplatten 68, 70 angeordnet. Die Kolben der jeweiligen Kolben- und Zylinderanordnungen greifen über die jeweiligen Kolbenstangen an die beweglichen Platten 14, 16 an, und zwar so, dass der Angriffspunkt der Kolbenstangen durch an den beweglichen Platten angebrachte, beispielsweise angeschweißte Anschläge wie 80 gebildet ist.

Bei einer alternativen Ausführungsform könnte für die Gelenkspielprüfung nur die eine der beweglichen Platten 14, 16 zu einer Bewegung direkt angetrieben werden und die andere blockiert oder freischwimmend unter der Einwirkung der angetriebenen Platte über das Rad mitbewegt werden.

Es soll auch zum Ausdruck gebracht werden, dass hydraulische, pneumatische, elektrische und elektromagnetische Antriebe für Antriebseinrichtungen zur Bewegung der Platten eingesetzt werden können. Die Erfindung ist nicht auf eine bestimmte Auslegung der Antriebseinrichtung beschränkt. Die konkrete Auslegung von Antrieben, die eine Hin- und Herbewegung einer Platte mit einer erwünschten Frequenz bewerkstelligen, ist aus dem eingangs genannten Stand der Technik bekannt und kann zum Zwecke der Plattenbewegung oder Prüfvorrichtung der vorliegenden Erfindung verwendet werden.

Eine erfindungsgemäße Prüfvorrichtung bietet folgende Vorteile:
- Durch die gezielten Bewegungsabläufe und die großen Plattenbewegungen ist nur eine Platte erforderlich.
- Der Achsspieltester hat eine äußert geringe Aufbauhöhe von 60 mm. Dadurch kann die Prüfplatte im Überflurbereich montiert werden und ist problemlos mit Fahrzeugen mit geringer Bodenfreiheit überfahrbar.
- Die Prüfplatte wird mit vier Dübeln am Überfluraufbau oder mit vier Schrauben auf einer Hebebühne mit Fahrschienen befestigt.
- Durch die Einzelplatte entfällt die Kabel- oder Leitungsverlegung auf die andere Seite einer Arbeitsgrube oder einer Hebebühne und erspart somit einiges and Bau- und Installationskosten und Montagematerial.
- Die Prüfplatte ist in zwei Hälften geteilt und vorzugsweise mit jeweils einem doppelt wirkenden Hydraulikzylinder bestückt.
- Für die Überprüfung der Achsaufhängung werden den beiden Plattenhälften mit einem Hubweg von 5 cm in die gleichmäßige Querbewegung versetzt und machen damit lose Teile an der Radaufhängung auf beiden Seiten gut sichtbar.
- Für die Überprüfung der Lenkhebel und deren Gelenke bewegen sich die beiden Plattenhälften gegeneinander und bewirken damit eine Lenkbewegung von ca. 10 cm, die auf beiden Fahrzeugseiten lose oder ausgeschlagene Lenkteile erkennen lässt.
- Eine gemeinsame und gegenseitige Querbewegung der beiden Plattenhälften.

Obwohl die vorliegende Beschreibung am Beispiel der Achs- und Gelenkspielprüfung der Vorderachse erfolgt ist, versteht sich, dass die Prüfung mit der gleichen Vorrichtung auch für eine Hinterachse oder eine andere Achse des Fahrzeugs durchgeführt werden kann.

## Patentansprüche

1. Prüfvorrichtung für Fahrzeuge (12) mit zwei in Querrichtung des Fahrzeugs beweglichen Platten (14, 16) mit jeweils einer Antriebseinrichtung, die die Räder (20) einer Achse des Fahrzeugs seitlich verschieben und lenken,
um ein etwaiges Achsspiel bzw. Gelenkspiel sichtbar zu machen,
**dadurch gekennzeichnet,**
**dass** die zwei beweglichen Platten (14, 16) hintereinander in Längsrichtung (22) des Fahrzeugs (12) angeordnet sind und miteinander eine ein Fahrzeugrad aufnehmende Radaufstandsfläche (24) bilden und dass die jeweiligen Antriebseinrichtungen (18) ausgelegt sind, um die zwei Platten (14, 16) zur Achsspielprüfung miteinander seitlich hin und her zu verschieben und zur Gelenkspielprüfung gegeneinander hin und her zu verschieben.

2. Prüfvorrichtung (10) nach Anspruch 1,
**dadurch gekennzeichnet,**
**dass** jede Antriebseinrichtung (18) zwei in entgegengesetzten Richtungen wirkende Kolben- und Zylinderanordnungen (30, 32) aufweist oder dass jede Antriebseinrichtung aus einer doppelt wirkenden Kolben- und Zylinderanordnung besteht, wobei die Kolben- und Zylinderanordnungen pneumatisch oder hydraulisch antreibbar sein können.

3. Prüfvorrichtung (10) nach einem der vorhergehenden Ansprüche,
**dadurch gekennzeichnet,**
**dass** sie für einen PKW eine Bauhöhe im Bereich von 4 - 10 cm, insbesondere von etwa 6 cm aufweist und/oder dass die Bewegungsamplitude jeder Platte (14, 16) im Bereich von 2 - 10 cm liegt und vorzugsweise etwa 5 cm beträgt.

4. Prüfvorrichtung (10) nach einem der vorhergehenden Ansprüche,
**dadurch gekennzeichnet,**
**dass** jeder beweglichen Platte (14, 16) eine am Boden oder an einer Fahrschiene einer Hebebühne befestigbaren Bodenplatte (44, 46) zugeordnet ist.

5. Prüfvorrichtung (10) nach Anspruch 4,
**dadurch gekennzeichnet,**
**dass** jede bewegliche Platte (14, 16) mittels zwei in Querrichtung des Fahrzeugs angeordneten, zueinander parallelen und voneinander in Fahrzeuglängsrichtung beabstandeten Gleitlagern (48, 50) an der jeweiligen Bodenplatte (44, 46) gleitend angeordnet ist.

6. Prüfvorrichtung (10) nach Anspruch 5,
**dadurch gekennzeichnet,**
**dass** die Gleitlager (48, 50) aus Teflonstreifen oder aus Teflon beschichteten Stangen bestehen.

7. Prüfvorrichtung (10) nach Anspruch 6,
**dadurch gekennzeichnet,**
**dass** die Gleitlager (48, 50) entweder in Nuten (51, 52) der Bodenplatte (44, 46) eingelassen sind und vorzugsweise über die Oberfläche der Bodenplatte hinausragen oder in Nuten der beweglichen Platte eingelassen sind und vorzugsweise über die Oberfläche der beweglichen Platte in Richtung der Bodenplatte hinausragen.

8. Prüfvorrichtung (10) nach einem der Ansprüche 4 bis 7,
**dadurch gekennzeichnet,**
**dass** jede bewegliche Platte (14, 16) mindestens zwei voneinander in Querrichtung des Fahrzeugs angeordnete Langlöcher (54) aufweist, in denen jeweilige von der Bodenplatte getragene Führungszapfen (58) angeordnet sind und dass jeder Führungszapfen (58) vorzugsweise einen Bereich mit zumindest der gleichen Querabmessung wie das diesem zugeordneten Langloch (54) aufweist und insbesondere dass jeder Führungszapfen (58) oberhalb der zugeordneten beweglichen Platte einen Bereich (62) aufweist mit einer Querabmessung, die größer ist als die Querabmessung des diesem zugeordneten Langlochs (54), wobei der Bereich (62) mit der größeren Querabmessung vorzugsweise durch eine Scheibe (64)gebildet ist, die mittels einer in die Stirnseite des Führungszapfens eingeschraubten Schraube (66) am Führungszapfen (58) befestigt ist.

9. Prüfvorrichtung (10) nach einem der vorhergehenden Ansprüche,
**dadurch gekennzeichnet,**
**dass** die beweglichen Platten (14, 16) jeweils eine konvexe Abdeckplatte (68, 70) aufweisen, die an der darunterliegenden beweglichen Platte angebracht bzw. angeschraubt ist, wobei die Abdeckplatten der zwei benachbarten beweglichen Platten zwischen sich eine Mulde (24) bilden.

10. Prüfvorrichtung (10) nach Anspruch 9,
**dadurch gekennzeichnet,**
**dass** die Mulde (24) eine Tiefe im Bereich von 2 - 8 cm, insbesondere von etwa 4 cm aufweist.

11. Prüfvorrichtung (10) nach Anspruch 9 oder 10,
**dadurch gekennzeichnet,**
**dass** die Abdeckplatten (68, 70) aus Riffelblech bestehen.

12. Prüfvorrichtung (10) nach Anspruch 4 und/oder einem der davon abhängigen Ansprüche,
**dadurch gekennzeichnet,**
**dass** die Kolben- und Zylinderanordnungen (30, 32) an den Bodenplatten (44, 46) befestigt sind und in Aussparungen (74) der beweglichen Platten (14, 16) vorzugsweise unterhalb des Scheitelbereiches der konvex gebogenen Abdeckplatten (68, 70) angeordnet sind, wobei die Kolben vorzugsweise über jeweilige Kolbenstangen (36, 38) an die beweglichen Platten angreifen und der Angriffspunkt der Kolbenstangen (36, 38) insbesondere durch jeweilige an den beweglichen Platten angebrachte, beispielsweise angeschweißte Anschläge (80) gebildet ist.

13. Prüfvorrichtung (10) nach Anspruch 1,
**dadurch gekennzeichnet,**
**dass** die Antriebseinrichtungen (18) elektrische oder elektromagnetische Antriebe umfassen oder elektrisch oder elektromagnetisch betätigbar sind.

14. Prüfvorrichtung (10) nach Anspruch 1,
**dadurch gekennzeichnet,**
**dass** die Antriebseinrichtungen mechanische Antriebe umfassen und gegebenenfalls manuell betätigbar sind.

## Claims

1. A testing apparatus for vehicles (12) comprising two plates (14, 16) which are movable in the transverse direction of the vehicle and which each have a drive device, said drive devices laterally displacing and directing the wheels (20) of an axle of the vehicle in order to make a possible axle clearance or joint clearance visible, **characterized in that**
the two movable plates (14, 16) are arranged behind one another in the longitudinal direction (22) of the vehicle (12) and form a wheel contact patch (24) with one another which receives a vehicle wheel; and **in that** the respective drive devices (18) are configured to mutually laterally displace the two plates (14, 16) to and fro to test for axle clearance and to displace them relative to one another to and fro to test for joint clearance.

2. A testing apparatus (10) in accordance with claim 1,
**characterized in that**
each drive device (18) has two piston and cylinder arrangements (30, 32) acting in opposite directions; or **in that** each drive device comprises a piston and cylinder arrangement which has a dual effect, with the piston and cylinder arrangements being able to be pneumatically or hydraulically drivable.

3. A testing apparatus (10) in accordance with one of the preceding claims,
**characterized in that**
it has a construction height in a range from 4 to 10 cm, in particular of approximately 6 cm, for a passenger car; and/or **in that** the movement amplitude of each plate (14, 16) is in a range from 2 to 10 cm and preferably amounts to approximately 5 cm.

4. A testing apparatus (10) in accordance with any one of the preceding claims,
**characterized in that**
a base plate (44, 46) fastenable to the ground or to a track of a lifting platform is associated with each movable plate (14, 16).

5. A testing apparatus (10) in accordance with claim 4,
**characterized in that**
each movable plate (14, 16) is slidingly arranged at the respective base plate (44, 46) by means of two slide bearings (48, 50) which are arranged in the transverse direction of the vehicle, which are in parallel with one another and which are spaced apart from one another in the longitudinal direction of the vehicle.

6. A testing apparatus (10) in accordance with claim 5,
**characterized in that**
the slide bearings (48, 50) comprise Teflon strips or rods coated with Teflon.

7. A testing apparatus (10) in accordance with claim 6,
**characterized in that**
the slide bearings (48, 50) are either embedded in grooves (51, 52) of the base plate (44, 46) and preferably project beyond the surface of the base plate or are embedded in grooves of the movable plate and preferably project beyond the surface of the movable plate in the direction of the base plate.

8. A testing apparatus (10) in accordance with any one of the claims 4 to 7,
**characterized in that**
each movable plate (14, 16) has at least two elongate holes (54) which are arranged displaced from one another in the transverse direction of the vehicle and in which respective guide spigots (58) supported by the base plate are arranged; and **in that** each guide spigot (58) preferably has a region having at least the same transverse dimension as the elongate hole (54) associated therewith has; and in particular **in that** each guide spigot (58) has a region (62) above the associated movable plate, said region having a transverse dimension which is larger than the transverse dimension of the elongate hole (54) associated therewith, with the region (62) having the larger transverse dimension preferably being formed by a disk (64) which is fastened at the guide spigot (58) by means of a screw (66) screwed into the end face of the guide spigot.

9. A testing apparatus (10) in accordance with any one of the preceding claims,
**characterized in that**
the movable plates (14, 16) each have a convex cover plate (68, 70), said cover plates being attached or screwed to the movable plate disposed thereunder, with the cover plates of the two adjacent movable plates forming a depression (24) between them.

10. A testing apparatus (10) in accordance with claim 9,
**characterized in that**
the depression (24) has a depth in a range from 2 to 8 cm, in particular of approximately 4 cm.

11. A testing apparatus (10) in accordance with claim 9 or claim 10,
**characterized in that**
the cover plates (68, 70) comprise a corrugated metal sheet.

12. A testing apparatus (10) in accordance with claim 4 and/or with any one of the claims dependent thereon,
**characterized in that**
the piston and cylinder arrangements (30, 32) are fastened to the base plates (44, 46) and are arranged in recesses (74) of the movable plates (14, 16), preferably beneath the apex region of the convexly curved cover plates (68, 70), with the pistons preferably engaging at the movable plates via respective piston rods (36, 38) and the point of engagement of the piston rods (36, 28) in particular being formed by respective abutments (80) which are attached, for example welded, to the movable plates.

13. A testing apparatus (10) in accordance with claim 1,
**characterized in that**
the drive devices (18) comprise electric or electromagnetic drives or are electrically or electromagnetically actuable.

14. A testing apparatus (10) in accordance with claim 1,
**characterized in that**
the drive devices comprise mechanical drives and are optionally manually actuable.

## Revendications

1. Dispositif de contrôle pour véhicules (12), comportant deux plaques (14, 16) mobiles en direction transversale du véhicule et pourvues chacune d'un organe d'entraînement, qui déplacent latéralement et dirigent les roues (20) d'un essieu du véhicule, afin de mettre en évidence un jeu éventuel dans l'essieu ou dans les joints d'articulation,
**caractérisé en ce que**
les deux plaques mobiles (14, 16) sont agencées l'une derrière l'autre en direction longitudinale (22) du véhicule (12) et constituent ensemble une surface d'appui de roue (24) recevant une roue du véhicule,
et **en ce que** les organes d'entraînement respectifs (18) sont conçus pour déplacer latéralement en va-et-vient les deux plaques (14, 16) conjointement en vue du contrôle du jeu dans l'essieu et pour les déplacer en va-et-vient l'une par rapport à l'autre en vue du contrôle du jeu dans les joints d'articulation.

2. Dispositif de contrôle (10) selon la revendication 1,
**caractérisé en ce que**
chaque organe d'entraînement (18) comprend deux agencements à piston et cylindre (30, 32) agissant en sens opposés, ou
**en ce que** chaque organe d'entraînement est constitué par un agencement à piston et cylindre à double effet, les agencements à piston et cylindre pouvant être entraînés par voie pneumatique ou par voie hydraulique.

3. Dispositif de contrôle (10) selon l'une des revendications précédentes, **caractérisé en ce que**
dans le cas d'une voiture particulière, il présente une hauteur structurelle dans l'ordre de 4 à 10 cm, en particulier d'environ 6 cm,
et/ou **en ce que** l'amplitude de mouvement de chaque plaque (14, 16) est dans l'ordre de 2 à 10 cm et s'élève de préférence à environ 5 cm.

4. Dispositif de contrôle (10) selon l'une des revendications précédentes,
**caractérisé en ce que**
à chaque plaque mobile (14, 16) est associée une plaque de fond (44, 46) apte à être fixée au sol ou à un rail de roulement d'une plateforme élévatrice.

5. Dispositif de contrôle (10) selon la revendication 4,
**caractérisé en ce que**
chaque plaque mobile (14, 16) est agencée en glissement sur la plaque de fond respective (44, 46) au moyen de deux paliers lisses (48, 50) agencés en direction transversale du véhicule, parallèles l'un à l'autre et espacés l'un de l'autre en direction longitudinale du véhicule.

6. Dispositif de contrôle (10) selon la revendication 5,
**caractérisé en ce que**
les paliers lisses (48, 50) sont constitués par des lames à base de Téflon ou par des barres revêtues de Téflon.

7. Dispositif de contrôle (10) selon la revendication 6,
**caractérisé en ce que**
les paliers lisses (48, 50) sont soit encastrées dans des rainures (51, 52) de la plaque de fond (44, 46) et dépassent de préférence au-delà de la surface de la plaque de fond, soit sont encastrées dans des rainures de la plaque mobile et dépassent de préférence au-delà de la surface de la plaque mobile en direction de la plaque de fond.

8. Dispositif de contrôle (10) selon l'une des revendications 4 à 7,
**caractérisé en ce que**
chaque plaque mobile (14, 16) comprend au moins deux trous oblongs (54) disposés l'un par rapport à l'autre en direction transversale du véhicule, dans lesquels sont agencés des tourillons de guidage respectifs (58) supportés par la plaque de fond,
et **en ce que** chaque tourillon de guidage (58) présente de préférence une zone ayant au moins la même dimension transversale que le trou oblong (54) qui lui est associé,
et en particulier **en ce que** chaque tourillon de guidage (58) présente une zone (62) au-dessus de la plaque mobile associée, qui a une dimension transversale supérieure à la dimension transversale du trou oblong (54) qui lui est associé, la zone (62) ayant la plus grande dimension transversale étant formée de préférence par un disque (64) qui est fixé sur le tourillon de guidage (58) au moyen d'une vis (66) vissée dans la face frontale du tourillon de guidage.

9. Dispositif de contrôle (10) selon l'une des revendications précédentes,
**caractérisé en ce que**
les plaques mobiles (14, 16) présentent chacune une plaque de recouvrement convexe (68, 70) qui est montée ou vissée sur la plaque mobile située au-dessous, les plaques de recouvrement des deux plaques mobiles voisines formant un creux (24) entre elles.

10. Dispositif de contrôle (10) selon la revendication 9,
**caractérisé en ce que**
le creux (24) présente une profondeur dans l'ordre de 2 à 8 cm, en particulier d'environ 4 cm.

11. Dispositif de contrôle (10) selon la revendication 9 ou 10,
**caractérisé en ce que**
les plaques de recouvrement (68, 70) sont constituées en tôle gaufrée.

12. Dispositif de contrôle (10) selon la revendication 4 et/ou selon l'une des revendications qui en dépendent,
**caractérisé en ce que**
les agencements à piston et cylindre (30, 32) sont fixés sur les plaques de fond (44, 46) et sont disposés dans des échancrures (74) des plaques mobiles (14, 16) de préférence au-dessous de la zone de sommet des plaques de recouvrement (68, 70) courbées convexes,
et les pistons attaquent les deux plaques mobiles de préférence par des tiges de piston respectives (36, 38), et le point d'attaque des tiges de piston (36, 38) est formé en particulier par des butées respectives (80) montées sur les plaques mobiles, par exemple par soudage.

13. Dispositif de contrôle (10) selon la revendication 1,
**caractérisé en ce que**
les organes d'entraînement (18) comprennent des entraînements électriques ou électromagnétiques ou sont aptes à être actionnés par voie électrique ou par voie électromagnétique.

14. Dispositif de contrôle (10) selon la revendication 1,
**caractérisé en ce que**
les organes d'entraînement comprennent des entraînements mécaniques et sont le cas échéant aptes à être actionnés par voie manuelle.
